Europäisches Patentamt

European Patent Office

Office européen des brevets

(11) Publication number: **0 188 218**
A2

# (12) EUROPEAN PATENT APPLICATION

(21) Application number: **86100139.4**

(22) Date of filing: **08.01.86**

(51) Int. Cl.⁴: **C 09 J 5/08**

(30) Priority: **16.01.85 JP 6501/85**

(43) Date of publication of application:
**23.07.86 Bulletin 86/30**

(84) Designated Contracting States:
**DE FR GB**

(71) Applicant: **NORDSON CORPORATION**
**555 Jackson Street P. O. Box 151**
**Amherst Ohio 44001(US)**

(72) Inventor: **Akasaki, Toshiro**
**1403 5-2-18 Mita**
**Minato-ku Tokyo(JP)**

(74) Representative: **Eisenführ & Speiser**
**Martinistrasse 24**
**D-2800 Bremen 1(DE)**

(54) Method for applying hot-melt adhesive foam and products made by this method.

(57) A method of forming a spider web configuration which includes the steps of providing a foamable hot melt adhesive followed by spraying such adhesive to form a spider-like web configuration of filaments on a substrate. The second substrate may thereafter be bonded to the first substrate to form a desired end product.

FIG.1

EP 0 188 218 A2

Croydon Printing Company Ltd.

## Detailed Description of the Invention:

The present invention pertains to a method for applying a hot-melt adhesive foam to products manufactured by this method.

In general, a roll coater or extruder is used to apply a hot melt to the surface of the substrate. Recently, a spray method has been developed to apply hot-melt adhesive to the surface of the glass wool mats.

The main constituent of a hot-melt adhesive is usually the thermoplastic resin itself, which consists of a simple or complex substance. However, hot melt adhesive can also include plasticizers, stabilizers, and adhesive resins as additives in small quantities, as necessary. Unlike coating materials, the hot melt adhesives include no diluent. Therefore, the viscosity of a hot melt adhesive is comparatively high, and its coagulating power is also strong. As a result, when a hot melt adhesive is air-sprayed, the sprayed particles are comparatively large.

That is why hot-melt adhesives are not usually sprayed, unlike coating materials. The diameter of the particles ranges very widely, i.e., between 50 and 5,000 microns, even at a viscosity of 1000 cps, which is comparatively low for a hot melt adhesive.

The fact that the particles are so large and vary so widely in size leads not only to the waste of material in the manufacturing process but also to low-quality products as a result of weak or nonuniform adhesion. In some cases, the surface of the objects to be bonded, including thin plastic films becomes rough, resulting in the loss of attractive appearance. Besides, the hardened hot melt adhesives are rough to the touch. For these reasons, the spraying of hot melt adhesions has been adopted only in the special areas.

- 1 -

The present invention pertains to a method for applying hot-melt adhesive foam by the use of hot air and to products manufactured by this method, that is, to products provided with hot-melt adhesive foam as an bonding agent. The invention, which makes efficient use of the properties of foamable hot-melt adhesives, is aimed at solving the defects of the products to which hot-melt adhesives have been applied by the conventional method of air spraying.

In the invention, a hot-melt adhesive foam is applied to the surface of a substrate by means of hot-air spraying. The products manufactured according to the invention have as their bonding agent a hot-melt adhesive foam applied by hot-air spraying.

Suitable hot-melt adhesive foams include nonvulcanized rubber-based thermoplastic resins, saturated polyester-based thermoplastic resins, polyamide-based thermoplastic resins, EVA, polyolefin-based thermoplastic resins, copolymerized polyolefin-based thermoplastic resins, and modified polyolefin-based thermoplastic resins. $N_2$, $Co_2$ and other gases in the form of innumerable air bubbles are incorporated into the above-mentioned various thermoplastic resins after they have been melted. As a result, the volume increases 1.5 to 10 times.

The foamed hot-melt adhesive not only retains its primary property of adhesivity but also has the following merits in the adhesion process: a reduction in the amount of adhesive material used as a result of a decrease in specific gravity; a lowered apparent viscosity under high pressure in the applicator; a decreased fluidity after application; a thinner adhesion layer and an expanded adhesion area after adhesion under pressure; a shortened set time; improved adhesion to porous or rough surfaces; a reduced

- 2 -

surface heat capacity, which prevents surface heat deformation when applied to thin sheets and other materials; an increase in the feasibility of low-temperature application; increased flexibility; improved sealability, softness, and touch; light weight; increased open time in the manufacturing process; and reduced total cost.

The method of the invention is described below. First, hot-melt adhesive is heated and melted in the hot melt applicator. Gas is mixed into the hot melt adhesive and then pressure is applied. The pressurized adhesive then flows through a pressure-resistant, heat-resistant hose and is air-sprayed from the fluid tip (nozzle) of the extruder. An air cap is provided at the end of the nozzle. The amount of atomized air ejected from the hole in the fluid tip and the amounts of atomized air and pattern air ejected from the hole in the air cap are controlled separately. The temperatures of the atomized air and pattern air are also controlled separately. These temperatures vary with the hot-melt foam, ranging between 100°C and 500°C. The setting of air temperature is very important, because both the temperature and air quantity are very important in determining the size of the very small atomized particles.

The mechanism of action in the invention is described in the following.

As described above, the hot-melt adhesive foam is a thermoplastic resin of comparatively high viscosity which has been heated and melted and into which air and other gases are incorporated under pressure. When released into the atmosphere through the fluid tip (nozzle), the thermoplastic resin expands and as atomized in an air spray process. When released, the pressure comes down from about 800 psi (56 kg/cm$^2$) to atmospheric pressure. At that time, the very small bubbles of compressed gas swell about 50 times or, in other

- 3 -

words, they explode. The thin film which is thus produced does not consist of large cohesive particles, like conventional hot-melt adhesives; rather, it consists of very small particles formed by atomization by the hot air ejected from the fluid tip (nozzle). This phenomenon does not occur with the conventional hot-melt adhesives, whose cohesive power is strong and which are difficult to form into very small particles. It is possible, however, to divide the present foamable hot-melt adhesives into very small particles. This fact is characteristic of hot-melt adhesive foam in hot air spray application, and it is also the starting point of the present invention.

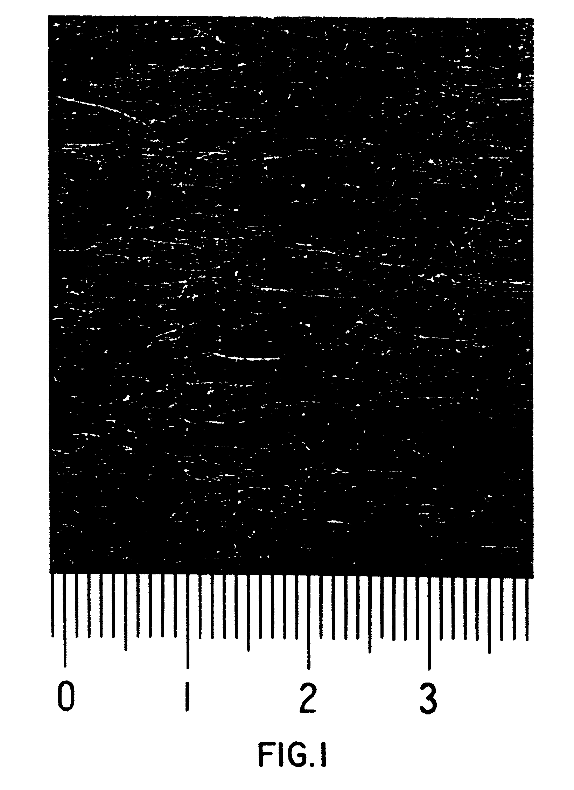

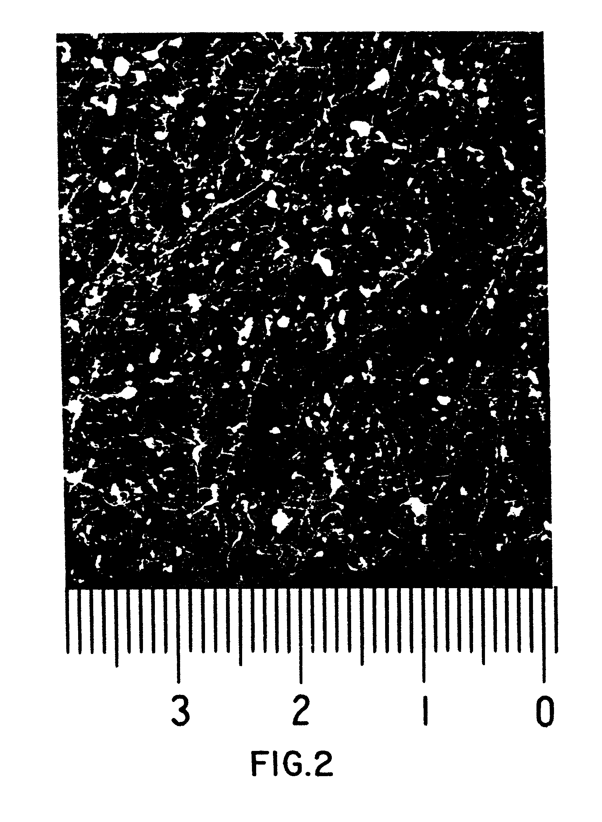

Many of the foamable hot-melt adhesives are polymers and are based on synthetic resins. They are highly adhesive. Therefore, when they are scattered by spraying, "stringing" occurs between the very small particles as shown in Figures 1 and 2. These very small particles form a network resembling a spider web. This spiderweb can form a comparatively even film on the surface of an uneven fiber like glass wool. This is a great merit of hot-melt adhesive foams.

In the case of the foamable hot-melt adhesives with comparatively weak adhesivity, the above-mentioned stringing is weak, but very small particles can still be produced as in the case of the hot melt with strong adhesive power. At the same time, the resin film, which has been spread by the expanding or foaming gas, is thinner. Besides, a film into which air bubbles have been incorporated is even thinner because of the properties of the foamed hot-melt adhesive. There are many products which would benefit from such thinner films.

The air spraying of hot-melt adhesive foams is almost the same as the conventional air spraying process, except for the selection of the ejection rates and the temperatures of the atomized air from the fluid tip as well as the atomized air and pattern air from the air cap. The proper selection of the ejection rates and temperatures makes it possible to obtain the optimum very small particles and the spider-web-like films. The ejection rates and temperatures vary with the size and shape of the substrate, the line speed, the nature of hot-melt adhesive, the thickness of applied film, etc. Generally speaking, however, at the present test stage, the data on the ejection rates and temperatures are as follows:

| item | spiderweb film | film of both spiderwebs and particles |
|---|---|---|
| 1. foamed hot melt adhesive | Eastman product A-150 (1900 cps) | same as to the left |
| 2. fluid tip (nozzle) | Nordson product 245-227J | same as to the left |
| 3. air cap | Nordson product 245-985J | same as to the left |
| 4. liquid pressure | 56 kg/cm$^2$ | 56 kg/cm$^2$ |
| 5. melting temperature | 190°C | 190°C |
| 6. spray rates | | |
| (a) foamable hot melt adhesive | 0.8 g/m$^2$ | 10 g/m$^2$ |
| (b) ejection rate of atomized air and | 90 ℓ/min | 110 ℓ/min |
| temperature of atomized air | 200°C | 240°C |
| (c) ejection rate of pattern air and | 110 ℓ/min | 130 ℓ/min |
| temperature of pattern air | 200°C | 240°C |

- 5 -

| item | spiderweb film | film of both spiderwebs and particles |
|------|----------------|--------------------------------------|
| 7. substrate | sheet | same as to the left |
| 8. line speed | 15.7 m/min | same as to the left |
| 9. room temperature | 20°C | 20°C |
| 10. humidity | 68% | 68% |
| 11. results (photo) | Figure 1 | Figure 2 |

The following is a detailed description of products to be made in accordance with the invention.

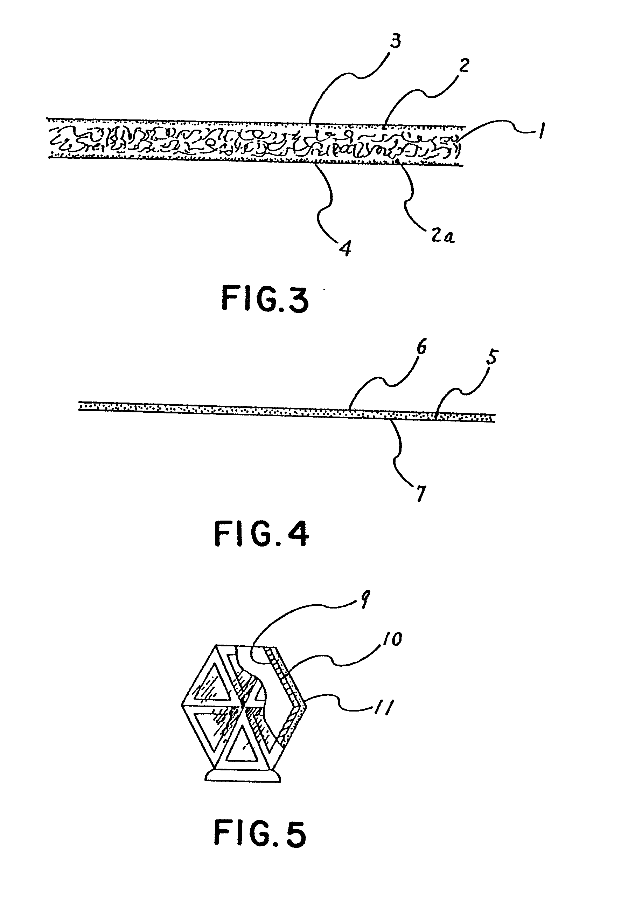

In the future, many products will be manufactured with the help of a hot-melt foam as the bonding agent, applied by means of hot-air spraying. Even at present, however, in the following cases, a foamable hot-melt adhesive can be used in place of an ordinary hot-melt adhesive for products onto which an ordinary hot-melt adhesive can be air-sprayed --- for instance, heat-insulating mats, in which case the glass wool mats are lined with aluminum foil or film as shown in Figure 3. In bonding aluminum foil to the glass wool, it is impossible to apply a coating of hot-melt adhesive to the glass wool surface, by standard methods because the short fibers are irregularly scattered. It would not be economical, however, to apply the hot-melt adhesive to the aluminum foil.

That is why hot-melt adhesives are air-sprayed onto glass wool. The heat-insulating mat is a product which is made by bonding glass wool to aluminum foil with a hot-melt adhesive as the bonding agent. In this invention, the conventional hot-melt adhesive is replaced by a hot-melt adhesive foam. The most notable merit of the invention is the great reduction in material cost. The invention also offers the following merits in the manufacturing process: a longer open time, a shorter set time, less sag, and no thermal deformation of the plastic film. The benefit to finished product is good appearance and particularly a smooth surface on the plastic film. The invention can be applied not only to the above-mentioned heat-insulating mats but also to disposable paper diapers, for which fluffy materials and nonwoven fabrics are used in place of glass wool. The surface of a diaper made according to the invention is soft to the touch.

The invention can also be applied to other products to which conventional hot-melt adhesives are applied by means of air spraying. For the conventional products, hot-melt adhesives are applied to the flat surfaces by roll coaters, extruders, or scrapers. However, hot-melt adhesive foam can also be applied by means of a hot-air spray to such products. As a result, laminated paper, plywood board, and other composites can be manufactured by this invention. Figure 4 shows a cross section of such a product. These products are characterized by a reduction in material cost, by thinness and lightness, by prevention of heat deformation, and by excellent flexibility and softness to the touch.

This invention can also be used to apply adhesives to three-dimensional surfaces. Figure 5 shows an example of pencil case. In the conventional method, the adhesive is applied to three-dimensional faces (needless to say, paper, cloth, plastic, or other material is bonded to the surface) manually with a brush. In this invention, however, the hot-melt adhesive foam is hot-air-sprayed onto the surfaces. As stated above, the invention method has many merits, including reduced amounts of material and a longer open time.

It is expected that this method for spraying the hot-melt adhesive foam with hot air can be adopted not only in the area of the conventional air-spraying of hot-melt adhesives, but also for application by roll coaters and scrapers.

As described above, when the hot-melt adhesive foam is hot-air-sprayed in accordance with the invention, not only adhesive can be saved, but also the open time can be prolonged and the setting time can be shortened, so that the working effiency can.be increased. Besides, the adhesion layer can be thinner; the surface of the bonded film can be smooth and beautiful, and the film will be soft to the touch. Thus, a light-weight, high-quality product can be obtained. When hot-air spraying the hot-melt adhesive foam, the conventional fluid tip (nozzle) and air cap for the air spray can be used. It is also possible to adjust the ejection rate and the air temperature at the fluid tip and air cap so that spiderweb film or thin film can be obtained. It goes without saying that the product cost can be reduced.

4.  Simple Explanations of the Figures:

Figure 1 shows a plane view of the "spiderweb" film produced by the invention. Figure 2 shows a plane view of a film comprising both a spiderweb and "particles." Figure 3 shows a cross-section of a heat-insulating mat, in which aluminum foil and plastic film are bonded onto the sides of a glass wool mat. Figure 4 shows a cross section of laminated paper in which cellophane and polypropylene are bonded. Figure 5 shows the exterior and section of a three-dimensional product (pencil case), for which a printed plastic sheet is bonded to the three-dimensional surfaces.

- 8 -

## Explanation of Symbols in the Figures

1................glass wool

2, 2A, 5, 10.....foamed hot melt adhesives

3................plastic film

4................aluminum foil

6................cellophane

7................polypropylene film

9................three dimensional pencil case

11...............printed plastic film or sheet

Claims:

(1) Method for applying hot-melt adhesive foam, characterized in that a foamable hot-melt adhesive is applied to the surface of a substrate by a hot-air spray method.

(2) Products to which a hot-melt adhesive foam has been applied, characterized in that the products have as the adhesion medium a hot-melt adhesive foam applied by a hot-air spray method.

0188218

FIG.I

FIG.2

FIG.3

FIG.4

FIG.5